# EUROPÄISCHE PATENTANMELDUNG

(11) **EP 3 502 404 A1**
(43) Veröffentlichungstag der Anmeldung: **26.06.2019**
(21) Anmeldenummer: 18213267.0
(22) Anmeldetag: 18.12.2018
(51) Int. Cl.: E06B 3/62

(54) **FENSTER- ODER TÜRPROFIL**

(30) Priorität: 20.12.2017 DE 202017107750 U
(71) Anmelder: REHAU AG + Co, 95111 Rehau (DE)
(72) Erfinder: Melzer, Klaus, 91099 Poxdorf (DE); Gorbunov, Igor, 90768 Fürth (DE); Eckert, Stefan, 91301 Forchheim (DE)

(57) **Zusammenfassung**

Die vorliegende Erfindung betrifft ein Fenster- oder Türprofil (1) aus thermoplastischem Kunststoff mit anextrudierter Dichtung (3), wobei das Fenster- oder Türprofil (1) eine Dichtungsaufnahmenut (4) mit zwei aufeinander zuweisenden Haltestegen (5, 5') zum Halten einer Ersatzdichtung umfasst, und wobei die anextrudierte Dichtung (2) zwei Verbindungsabschnitte (8, 8') zur stoffschlüssigen Verbindung der anextrudierten Dichtung (2) an das Fenster- oder Türprofil (1) und einen Dichtungskopf (9) umfasst, und die anextrudierte Dichtung (2) die Dichtungsaufnahmenut (4) vollständig verdeckt, wobei mindestens ein Verbindungsabschnitt (8, 8') mit einer zur Profilaußenseite (7) gerichteten Profilaußenwand (6) stoffschlüssig verbunden ist, wobei die zur Profilaußenseite (7) gerichtete Profilaußenwand (6) mindestens eine Ausnehmung (10, 10') aufweist, in die ein mit der Profilaußenwand (6) stoffschlüssig verbundener Verbindungsabschnitt (8, 8') aufgenommen ist.

## Beschreibung

Die vorliegende Erfindung betrifft ein Fenster- oder Türprofil aus thermoplastischem Kunststoff mit anextrudierter Dichtung, wobei das Fenster- oder Türprofil eine Dichtungsnut mit zwei aufeinander zuweisenden Haltestegen zum Halten einer Ersatzdichtung umfasst, und wobei die anextrudierte Dichtung zwei Verbindungsabschnitte zur stoffschlüssigen Verbindung der anextrudierten Dichtung an das Fenster- oder Türprofil und einen Dichtungskopf umfasst, und die anextrudierte Dichtung die Dichtungsnut vollständig verdeckt, wobei mindestens ein Verbindungsabschnitt mit einer zur Profilaußenseite gerichteten Profilaußenwand stoffschlüssig verbunden ist.

Grundsätzlich besitzen Kunststoffprofile für Fenster und Türen mehrere Dichtungen. Dabei unterscheidet man insbesondere Anschlagdichtungen und Verglasungsdichtungen. Die Verglasungsdichtungen sind von außen erkennbar und in dem Spalt zwischen dem Flächenelement des Fensters, insbesondere der Isolierglasscheibe, und dem Flügelrahmen bzw. bei Festverglasungen dem Blendrahmen angeordnet. Die Anschlagdichtungen haben dagegen die Aufgabe, den Spalt zwischen dem Blendrahmen und dem Flügelrahmen auf der Außenseite und der Innenseite des Fensters abzudichten und dabei teilweise herstellungsbedingte Toleranzen im jeweiligen Spaltmaß aufnehmen.

Im Stand der Technik ist es bekannt, sowohl Anschlagdichtungen als auch Verglasungsdichtungen als weichelastische Dichtungen auszubilden, die unter Verwendung eines entsprechenden Dichtungsfußes in Dichtungsaufnahmenuten des Blendrahmens oder des Flügelrahmens eingerollt oder eingedrückt werden. In jüngerer Zeit werden diese eingerollten oder eingedrückten Dichtungen in wachsendem Umfang durch anextrudierte Dichtungen aus weichelastischem, thermoplastischem Material ersetzt. Dabei kommt in der Regel ein sogenanntes Post-Coextrusionsverfahren (PCE) zum Einsatz. Bei einem solchen PCE-Verfahren wird die jeweilige Dichtung inline an die extrudierten und schon kalibrierten Blendrahmen- und Flügelrahmenprofile anextrudiert.

Aufgrund der unterschiedlichen Anforderungen an Verglasungsdichtungen einerseits und Anschlagdichtungen andererseits hinsichtlich Anpressdruck und abzudichtendem Spaltmaß kommen in der Regel für Verglasungsdichtungen und Anschlagdichtungen Dichtungsprofile mit unterschiedlichen Profilgeometrien zum Einsatz. Daher gibt es Tendenzen, sogenannte Universaldichtungen einzusetzen, also Dichtungen, die sowohl als Anschlagdichtung als auch als Verglasungsdichtung eingesetzt werden können. Ein solche Universaldichtung ist beispielsweise in der DE 197 20 940 B4 beschrieben. Bei der in der DE 197 20 940 B4 offenbarten Universaldichtung handelt es sich um eine anextrudierte Dichtung, die mit identischer Geometrie sowohl als Anschlagdichtung als auch als Verglasungsdichtung fungieren kann. Die Dichtungsgeometrie hat sich zwar in der Praxis als weitgehend geeignet erwiesen, allerdings neigt diese Dichtung beim Einsatz als Verglasungsdichtung sowie beim Einsatz als Anschlagdichtung an der Bandseite zum Krempeln oder Einrollen, d. h., die Dichtung wird bei gleichzeitiger Druck- und Scherbeanspruchung ungleichmäßig, zum Teil wellenförmig deformiert.

Um diesen Nachteil zu beheben, wird in der EP 2 265 790 B1 eine Universaldichtung vorgeschlagen, die einen Dichtungsfuß und einen Dichtungskopf aufweist, wobei der Dichtungskopf in eine Dichtungsnut mit zwei aufeinander zuweisenden Haltestegen eingebracht ist. Der Dichtungskopf weist eine Auflagefläche, die am jeweiligen Flügelrahmenprofil oder Blendrahmenprofil anliegt, einen zur Außenseite geneigten oder gebogenen Sichtbereich, einen Dichtbereich und einen den Dichtbereich abstützenden Stützsteg auf. Gemäß der EP 2 265 790 B1 ist an der Auflagefläche ein zur Innenseite geneigter, in die Hohlkammer weisender Stütznocken angeordnet, durch den der Stützsteg gestützt werden kann. Nachteilig an der in der EP 2 265 790 B1 beschriebenen Dichtung wird gesehen, dass diese einen hohen Materialeinsatz erfordert. Darüber hinaus kann es insbesondere bei hohen Extrusionsgeschwindigkeiten bei der Herstellung zu Schwankungen im Öffnungsmaß der Dichtungsaufnahmenut kommen kann, was zu ungewollten Materialanhäufungen in der Nutöffnung und dadurch zu einer mangelnden Anhaftung der anextrudierten Dichtung an dem diese umfassenden Fenster- oder Türprofil kommen.

An dieser Stelle setzt die vorliegende Erfindung ein, deren Aufgabe darin liegt, ein Fenster- oder Türprofil aus thermoplastischem Kunststoff mit anextrudierter Dichtung zur Verfügung zu stellen, das die Nachteile des Stands der Technik überwindet. Insbesondere soll das erfindungsgemäße Fenster- oder Türprofil hohe Extrusionsgeschwindigkeiten bei seiner Herstellung bei definierter Anbindung der anextrudierten Dichtung an das Fenster- oder Türprofil erlauben.

Diese und andere Aufgaben werden durch ein Fenster- oder Türprofil mit den Merkmalen des Anspruchs 1 gelöst. Bevorzugte Ausführungsformen des erfindungsgemäßen Fenster- oder Türprofils sind in den abhängigen Ansprüchen beschrieben.

Gemäß der vorliegenden Erfindung wurde erkannt, dass ein gleichmäßiges und ausreichendes Anhaften der Dichtung auch bei Schwankungen des Öffnungsmaßes der Dichtungsaufnahmenut dadurch erzielt werden kann, dass die Dichtung auf mindestens einer Seite in einer Ausnehmung in der Profilaußenwandeinseitig an der Außenseite des Profils aufgenommen ist. Auf diese Weise ist das Auftreten von Materialanhäufungen im Bereich der Nutöffnung der Dichtungsaufnahmenut verhindert.

Wie hierin verwendet wird der Begriff "Öffnungsmaß" einer Nut der Abstand zwischen den Nutflanken im Bereich der Öffnung der Nut verstanden.

Dementsprechend liegt die vorliegende Erfindung in der Bereitstellung eines Fenster- oder Türprofils aus thermoplastischem Kunststoff mit anextrudierter Dichtung, wobei das Fenster- oder Türprofil eine Dichtungsaufnahmenut mit zwei aufeinander zuweisenden Haltestegen zum Halten einer Ersatzdichtung umfasst, und wobei die anextrudierte Dichtung zwei Verbindungsabschnitte zur stoffschlüssigen Verbindung der anextrudierten Dichtung an das Fenster- oder Türprofil und einen Dichtungskopf umfasst, und die anextrudierte Dichtung die Dichtungsaufnahmenut vollständig verdeckt, wobei mindestens ein Verbindungsabschnitt mit einer zur Profilaußenseite gerichteten Profilaußenwand stoffschlüssig verbunden ist, wobei das Fenster- oder Türprofil erfindungsgemäß dadurch gekennzeichnet, dass die zur Profilaußenseite gerichtete Profilaußenwand mindestens eine Ausnehmung aufweist, in die ein mit der Profilaußenwand stoffschlüssig verbundener Verbindungsabschnitt aufgenommen ist.

Wie hierin verwendet ist der Begriff "Ausnehmung" in einer Profilwand so zu verstehen, dass sich die Ausnehmung nicht über die gesamte Wandstärke der Profilwand erstreckt, also noch eine Restwandstärke vorhanden ist.

In Bezug auf das erfindungsgemäße Fenster- oder Türprofil ist es bevorzugt, wenn die zur Profilaußenseite gerichtete Profilaußenwand zwei Ausnehmungen aufweist, in die jeweils ein Verbindungsabschnitt aufgenommen ist. Auf diese Weise wird die Wahrscheinlichkeit einer Materialanhäufung im Bereich der Dichtung im geschlossenen Zustand eines das erfindungsgemäße Fenster- oder Türprofil umfassenden Fensters oder einer das erfindungsgemäße Fenster- oder Türprofil umfassenden Tür weiter reduziert.

Hinsichtlich der Reduktion der Wahrscheinlichkeit einer Materialanhäufung im Bereich der Dichtung kann es auch bevorzugt sein, wenn der in einer Ausnehmung aufgenommene Verbindungsabschnitt nicht über die zur Profilaußenseite gerichtete Profilaußenwand hinausragt. Weiter trägt dies auch zur Materialeinsparung bei. Wenn beide Verbindungsabschnitte in eine entsprechende Ausnehmung aufgenommen sind, ist es bevorzugt, wenn beide Verbindungsabschnitte nicht über die zur Profilaußenseite gerichtete Profilaußenwand hinausragt. Dabei ist es besonders günstig, wenn der in eine Ausnehmung aufgenommene Verbindungsabschnitt, der sich an der Seite der Dichtung mit dem Hauptanteil des Materials des Dichtungskopfes befindet, nicht über den sich an die entsprechende Ausnehmung anschließenden Abschnitt der zur Profilaußenseite gerichteten Profilaußenwand hinausragt. Dies trägt ganz erheblich dazu bei, dass es im Bereich der Dichtung zu keinen Materialanhäufungen kommt, so dass das erfindungsgemäße Fenster- oder Türprofil mit hoher Extrusionsgeschwindigkeit hergestellt werden kann.

Es kann auch bevorzugt sein, wenn die zur Profilaußenseite gerichtete Profilaußenwand genau eine Ausnehmung aufweist, in die der erste Verbindungsabschnitt aufgenommen ist, und der zweite Verbindungsabschnitt mit der Seite des Haltestegs, die auf den anderen Haltesteg zuweist, stoffschlüssig verbunden ist. So ist eine einheitliche Dichtungsanbindung unabhängig von Schwankungen im Dichtungsmaß der Dichtungsaufnahmenut gewährleistet.

Es kann auch von Nutzen sein, wenn die anextrudierte Dichtung keinen in die Dichtungsaufnahmenut hineinragenden Dichtungsfuß umfasst. Auch dies trägt weiter auch zur Materialeinsparung bei. Darüber hinauswerden soll Materialanhäufungen im Bereich der Öffnung der Dichtungsaufnahmenut verhindert, was wiederum für ein definiertes Anhaften der anextrudierten Dichtung an dem erfindungsgemäßen Fenster- oder Türprofil sorgt.

Es kann auch von Nutzen sein, wenn die Dichtung im PCE-Verfahren an das Fenster- oder Türprofil anextrudiert ist. Dies sorgt für eine stabile, stoffschlüssige Verbindung zwischen den Verbindungsabschnitten der anextrudierten Dichtung und dem Fenster- oder Türprofil.

Bevorzugt wird die anextrudierte Dichtung aus thermoplastischem Elastomer oder Weich-PVC (PVC-P) hergestellt, insbesondere homogen aus nur einer Komponente.

Bevorzugt ist die anextrudierte Dichtung als Anschlagsdichtung eingesetzt.

Das erfindungsgemäße Fenster- oder Türprofil sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Im Folgenden soll die vorliegende Erfindung unter Bezugnahme auf die in den Figuren dargestellten Ausführungsformen des erfindungsgemäßen Fenster- oder Türprofils im Detail erläutert werden. Insoweit sich Teile oder Bauelemente in ihrer Funktion entsprechen, wird deren Beschreibung nicht in jeder der folgenden Figuren wiederholt. Es zeigen:
- Fig. 1: ein Ausschnitt aus einer Querschnittsdarstellung einer Ausführungsform des erfindungsgemäßen Fenster- oder Türprofils; und
- Fig. 2: den in Fig. 1 gezeigten Ausschnitt unter Weglassen der anextrudierten Dichtung; und
- Fig. 3: ein Ausschnitt aus einer Querschnittsdarstellung einer weiteren Ausführungsform des erfindungsgemäßen Fenster- oder Türprofils..

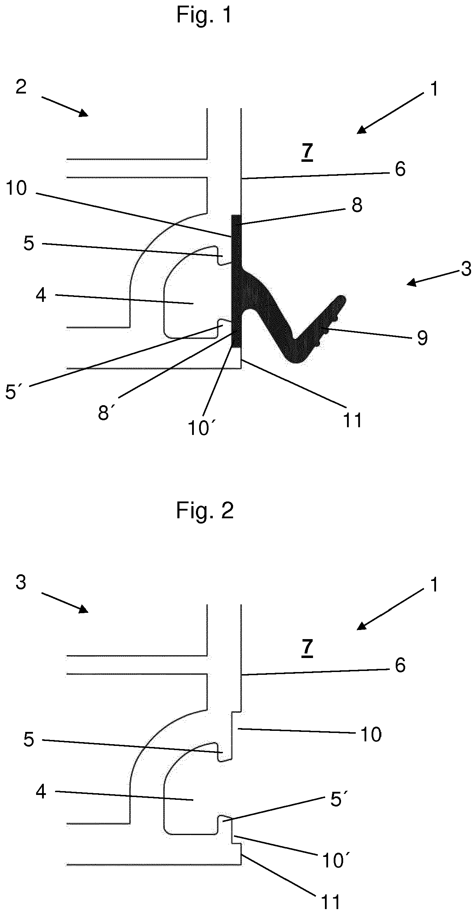

In Fig. 1 ist ein Ausschnitt aus einer Querschnittsdarstellung einer Ausführungsform des erfindungsgemäßen Fenster- oder Türprofils 1 am Beispiel eines Flügelprofils für ein Kunststofffenster gezeigt. Das erfindungsgemäße Fenster- oder Türprofil 1 ist aus einem thermoplastischen Polymermaterial hergestellt, vorzugsweise Polyvinylchlorid (PVC), insbesondere Hart-PVC (PVC-U) oder glasfaserverstärktem PVC, dem zusätzlich Zusatzstoffe wie z. B. Stabilisatoren, Weichmacher, Pigmente und dergleichen zugesetzt sind. Es ist aus einer Vielzahl von Hohlkammern aufgebaut, die jeweils von Stegen des erfindungsgemäßen Fenster- oder Türprofils 1 umgeben sind. Eine Dichtung 2 ist an ein Profilstück 3 des erfindungsgemäßen Fenster- oder Türprofils 1 anextrudiert.

Das erfindungsgemäße Fenster- oder Türprofil 1 weist eine Dichtungsaufnahmenut 4 auf. Die Dichtungsaufnahmenut 4 wird im Bereich ihrer Öffnung durch zwei aufeinander zuweisende Haltestege 5, 5' begrenzt. Aufgabe der Haltestege 5, 5' ist es insbesondere, eine Ersatzdichtung für die anextrudierte Dichtung 2 klemmend in der Dichtungsaufnahmenut 4 zu halten, wenn die anextrudierte Dichtung 2 entfernt worden ist, beispielsweise aus Verschleißgründen. An ihren der Öffnung der Dichtungsaufnahmenut 4 abgewandten Enden setzen sich die Haltestege 5, 5' in einer Profilaußenwand 6 fort. Die Profilaußenwand 6 ist zur Profilaußenseite 7 gerichtet. In der Profilaußenwand 6 befindet sich an beiden Seiten der Öffnung der Dichtungsaufnahmenut 4 jeweils eine Ausnehmung 10, 10'.

Die anextrudierte Dichtung 2 umfasst zwei Verbindungsabschnitte 8, 8' und einen Dichtungskopf 9 auf. In der dargestellten Ausführungsform besitzt der Dichtungskopf 9 im Wesentlichen eine V-Form, durch die der beim Schließen des Fensters oder der Tür auftretende Schließdruck aufgenommen werden soll. Der beiden Verbindungsabschnitte 8,8' der anextrudierten Dichtung 2 sind jeweils als im Wesentlichen gerade Lappen ausgebildet, der flächig in die jeweilige Ausnehmung 10, 10' in der Profilaußenwand 6 aufgenommen anextrudiert ist, also stoffschlüssig mit der Profilaußenwand 6 verbunden. Die Verbindung zwischen den Verbindungsabschnitten 8, 8' der anextrudierten Dichtung 2 und dem erfindungsgemäßen Fenster- oder Türprofil 1 erstreckt sich dabei auch in die zur Profilaußenseite 7 gerichtete Oberfläche des ersten Haltestegs 5 und des zweiten des ersten Haltestegs 5' der Dichtungsaufnahmenut 4. Schwankungen im Öffnungsmaß der Dichtungsaufnahmenut 4 wirken sich so nicht auf die Verbindungsflächen zwischen der anextrudierten Dichtung 2 und dem Fenster- oder Türprofil 1 aus. Dabei ragen die in die Ausnehmungen 10, 10' aufgenommenen Verbindungsabschnitte 8, 8' nicht über die zur Profilaußenseite 7 gerichtete Profilaußenwand 6 hinaus. Insbesondere ragt der in die Ausnehmung 10' aufgenommene Verbindungsabschnitt 8', der sich an der Seite der Dichtung 3 mit dem Hauptanteil des Materials des Dichtungskopfes 9 befindet, nicht über den sich an die entsprechende Ausnehmung 10' anschließenden Abschnitt 11 der zur Profilaußenseite 7 gerichteten Profilaußenwand 6 hinaus. Es kommt auch dadurch zu keinen Materialanhäufungen in diesem Bereich, so dass das erfindungsgemäße Fenster- oder Türprofil 1 mit hoher Extrusionsgeschwindigkeit hergestellt werden kann. Ein Dichtungsfuß, der die Haltestege 5, 5' zur Befestigung am erfindungsgemäßen Fenster- oder Türprofil hintergreifen würde, ist für das Erzielen einer ausreichenden Befestigung der anextrudierten Dichtung 2 nicht erforderlich, was zu erheblichen Materialeinsparungen führt.

Die anextrudierte Dichtung 2 ist im Post-Coextrusionsverfahren (PCE-Verfahren) aus Weich-PVC (PVC-P) an das Profilstück 3 aus Hart-PVC (PVC-U) anextrudiert, wobei die Verbindungsabschnitte 8, 8' mit der Profilaußenwand 6 stoffschlüssig verbunden sind.

In Fig. 2 ist der Ausschnitt gemäß Fig. 1 noch einmal dargestellt, in Fig. 2 jedoch ohne die anextrudierte Dichtung. Darin lässt sich die Positionierung der Ausnehmungen 10, 10' an beiden Seiten der Öffnung der Dichtungsaufnahmenut 4 gut erkennen. Die Ausnehmungen 10, 10' erstrecken sich auch über die zur Profilaußenseite 7 gerichtete Seite der Haltestege 5,5'.

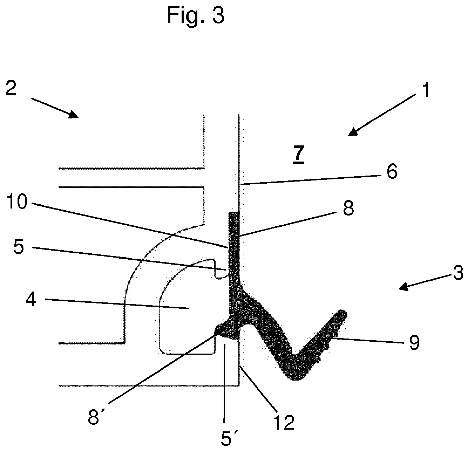

In Fig. 3 ist eine weitere Ausführungsformen des erfindungsgemäßen Fenster- oder Türprofils 1 gezeigt. Um Wiederholungen zu vermeiden, werden daher im Folgenden nur Unterschiede zu der in Fig. 1 dargestellten Ausführungsform des erfindungsgemäßen Fenster- oder Türprofils 1 beschrieben. Die Ausführungen zu Fig. 1 gelten auch für die Ausführungsform gemäß Fig. 2 entsprechend. Gleiche Elemente sind in den Abbildungen durch identische Bezugszeichen gekennzeichnet.

In der in Fig. 3 dargestellten Ausführungsform umfasst die anextrudierte Dichtung 2 wiederum zwei Verbindungsabschnitte 8, 8' und einen Dichtungskopf 9 auf, der auch in dieser Ausführungsform im Wesentlichen eine V-Form besitzt, durch die der beim Schließen des Fensters oder der Tür auftretende Schließdruck aufgenommen werden soll. In dieser Ausführungsform des erfindungsgemäßen Fenster- oder Türprofils 1 ist lediglich der erste Verbindungsabschnitt 8 der anextrudierten Dichtung 2 als im Wesentlichen gerader Lappen ausgebildet und flächig an die Profilaußenwand 6 anextrudiert. Dabei ist der erste Verbindungsabschnitt 8 in der Ausnehmung 10 in der Profilaußenwand 6 aufgenommen und dabei an diese anextrudiert, ist also stoffschlüssig mit der Profilaußenwand 6 verbunden. Die Verbindung zwischen dem ersten Verbindungsabschnitt 8 der anextrudierten Dichtung 2 und dem erfindungsgemäßen Fenster- oder Türprofil 1 erstreckt sich dabei auch in die zur Profilaußenseite 7 gerichtete Oberfläche des ersten Haltestegs 5 der Dichtungsaufnahmenut 4. Dabei ragt der in die Ausnehmungen 10 aufgenommene Verbindungsabschnitt 8 nicht über die zur Profilaußenseite 7 gerichtete Profilaußenwand 6 hinaus.

An der anderen Seite der Öffnung der Dichtungsaufnahmenut 7 weist das erfindungsgemäße Fenster- und Türprofil 1 keine Ausnehmung in der Profilaußenwand 6 auf. Stattdessen ist der dem ersten Haltesteg 5 in der Öffnung der Dichtungsaufnahmenut 4 gegenüberliegende zweite Haltesteg 5' an der Seite, die auf den ersten Haltesteg 5 zuweist, stoffschlüssig mit dem zweiten Verbindungsabschnitt 8' verbunden. Dadurch ist die Dichtungsaufnahmenut 4 vollständig von der anextrudierten Dichtung 2 überdeckt. Schwankungen im Öffnungsmaß der Dichtungsaufnahmenut 4 wirken sich so nicht auf die Verbindungsflächen zwischen der anextrudierten Dichtung 2 und dem Fenster- oder Türprofil 1 aus. Es kommt auch zu keinen Materialanhäufungen in diesem Bereich, so dass das erfindungsgemäße Fenster- oder Türprofil 1 mit hoher Extrusionsgeschwindigkeit hergestellt werden kann. Dazu trägt auch bei, dass der zweite Verbindungsabschnitt 8' im Bereich der Verbindung zwischen dem zweiten Verbindungsabschnitt 8' und dem Haltesteg 5' nicht über die zur Profilaußenseite 7 gerichtete Wand 12 des Haltestegs 5' hinausragt. Ein Dichtungsfuß, der die Haltestege 5, 5' zur Befestigung am erfindungsgemäßen Fenster- oder Türprofil hintergreifen würde, ist für das Erzielen einer ausreichenden Befestigung der anextrudierten Dichtung 2 nicht erforderlich, was zu erheblichen Materialeinsparungen führt.

Die anextrudierte Dichtung 2 ist wiederum im Post-Coextrusionsverfahren (PCE-Verfahren) aus Weich-PVC (PVC-P) an das Profilstück 3 aus Hart-PVC (PVC-U) anextrudiert, wobei der erste Verbindungsabschnitt 8 mit der Profilaußenwand 6 und der zweite Verbindungsabschnitt 8' mit dem Haltesteg 5' stoffschlüssig verbunden sind.

Die vorliegende Erfindung wurde exemplarisch unter Bezugnahme auf Fensterprofile für den Flügelrahmen eines Fensters beschrieben. Es versteht sich, dass die vorliegende Erfindung auch auf Blendrahmenprofile für ein Fenster sowie für Blendrahmen-, Zargen- oder Flügelrahmenprofile einer Tür entsprechend anwendbar ist.

## Patentansprüche

1. Fenster- oder Türprofil (1) aus thermoplastischem Kunststoff mit anextrudierter Dichtung (3), wobei das Fenster- oder Türprofil (1) eine Dichtungsaufnahmenut (4) mit zwei aufeinander zuweisenden Haltestegen (5, 5') zum Halten einer Ersatzdichtung umfasst, und wobei die anextrudierte Dichtung (2) zwei Verbindungsabschnitte (8, 8') zur stoffschlüssigen Verbindung der anextrudierten Dichtung (2) an das Fenster- oder Türprofil (1) und einen Dichtungskopf (9) umfasst, und die anextrudierte Dichtung (2) die Dichtungsaufnahmenut (4) vollständig verdeckt, wobei mindestens ein Verbindungsabschnitt (8, 8') mit einer zur Profilaußenseite (7) gerichteten Profilaußenwand (6) stoffschlüssig verbunden ist,
**dadurch gekennzeichnet, dass**
die zur Profilaußenseite (7) gerichtete Profilaußenwand (6) mindestens eine Ausnehmung (10, 10') aufweist, in die ein mit der Profilaußenwand (6) stoffschlüssig verbundener Verbindungsabschnitt (8, 8') aufgenommen ist.

2. Fenster- oder Türprofil (1) nach Anspruch 1, **dadurch gekennzeichnet, dass** die zur Profilaußenseite (7) gerichtete Profilaußenwand (6) zwei Ausnehmungen (10, 10') aufweist, in die jeweils ein Verbindungsabschnitt (8, 8') aufgenommen ist.

3. Fenster- oder Türprofil (1) nach Anspruch 1 oder Anspruch 2, **dadurch gekennzeichnet, dass** der in einer Ausnehmung (10, 10') aufgenommene Verbindungsabschnitt (8, 8') nicht über die zur Profilaußenseite (7) gerichtete Profilaußenwand (6) hinausragt.

4. Fenster- oder Türprofil (1) nach Anspruch 1, **dadurch gekennzeichnet, dass** die zur Profilaußenseite (7) gerichtete Profilaußenwand (6) genau eine Ausnehmung (10) aufweist, in die der erste Verbindungsabschnitt (8) aufgenommen ist, und der zweite Verbindungsabschnitt (8') mit der Seite des Haltestegs (5'), die auf den anderen Haltesteg (5) zuweist, stoffschlüssig verbunden ist.

5. Fenster- oder Türprofil (1) nach einem der Ansprüche 1 bis 3, **dadurch gekennzeichnet, dass** die anextrudierte Dichtung (2) keinen in die Dichtungsaufnahmenut (4) hineinragenden Dichtungsfuß umfasst.

6. Fenster- oder Türprofil (1) nach einem der Ansprüche 1 bis 5, **dadurch gekennzeichnet, dass** die Dichtung (2) im PCE-Verfahren anextrudiert ist.
